# EUROPEAN PATENT SPECIFICATION

(11) **EP 1 742 886 B1**
(45) Date of publication and mention of the grant of the patent: **09.07.2008**
(21) Application number: 05740471.7
(22) Date of filing: 26.04.2005
(51) Int. Cl.: C03B 35/18, B65G 39/02

(54) **ROLLER AND ROTATIONAL DRIVING DEVICE**
WALZE UND ROTATIONSANTRIEBSVORRICHTUNG
ROULEAU ET DISPOSITIF D'ENTRAINEMENT EN ROTATION

(30) Priority: 28.04.2004 EP 04447104
(43) Date of publication of application: 17.01.2007
(73) Proprietor: VESUVIUS CRUCIBLE COMPANY, Wilmington, DE 19803 (US)
(72) Inventor: RANCOULE, Gilbert, F-59700 Marcq-en-Baroeul (FR); DEREMETZ, Jacky, F-59330 Neuf Mesnil (FR)
(74) Representative: Debled, Thierry
(86) International application number: PCT/BE2005/000056
(87) International publication number: WO 2005/105682

(56) References cited:
- EP-A- 1 473 534
- DE-C- 454 616
- GB-A- 2 134 218
- US-A- 4 247 000
- US-A- 5 146 675
- PATENT ABSTRACTS OF JAPAN vol. 1999, no. 03, 31 March 1999 (1999-03-31) -& JP 10 324534 A (ASAHI GLASS CO LTD), 8 December 1998 (1998-12-08) cited in the application

## Description

The invention relates to a roller from a refractory material, for example in vitreous silica, for transporting a flat article provided at its end with a new arrangement for rotationally driving it as well as to an assembly of such a roller and its driving device.

In the glass or metallurgical industry, the conveyance of glass or metal in the course of being elaborated and under the form of plates, sheets, foils or continuous strips, is carried over on rollers arranged parallel together. This transportation is generally performed at high temperature.

These rollers are rotationally driven at a liner speed equal to this of the glass or metal so as not to damage the surface.

More particularly, in the case of the transportation of a metal strip or band, every roller is supported on a steel shaft passing through an axial bore of the roller and projects beyond the roller at its both ends, ensuring simultaneously its rectilinear support and its centering during the rotation. To this end, this axial bore presents a smooth cylindrical longitudinal inner surface which is precisely coaxial to the external longitudinal face of the roller and shows a predetermined diameter.

Generally, the rotational driving of the roller is ensured by a driving device comprising fingers parallel to the shaft, arranged around each of the ends thereof and borne by a support rotating with the shaft. Every pin engages into a recess formed in the lateral face of the roller, i.e. in the thickness of the roller which is comprised between the longitudinal bore and the external longitudinal face. There is however also a driving device using pins perpendicular to the shaft. Such a device is disclosed in the document WO-A1-99/15305. It can be easily understood that such a system cannot perform efficiently when the roller and the driving device are formed from materials having different thermal expansion coefficient.

As a variant of the conventional device, a roller whose lateral faces are provided with one or more recesses opening on the external surface of the roller is known from the document JP-A-10-324534.

A defect which can appear with such a driving device acting on such rollers is that the edge of the roller, weakened by the presence of the indentations, is broken in its part comprised between the indentation and the axial bore. In particular, during use of the roller, the increase in temperature to which the roller and the driving device are subjected causes significant dimensional differences which increase the risk of break of the roller around its driving indentations.

While such a defect is not directly detrimental to the proper performance of the roller, the presence of silica fragments close to the metal or the glass being conveyed, to the driving device or even inside the longitudinal bore can become worrying.

This defect occurs in particular on small diameter rollers, for example of 120 mm, inside which there remains rather little matter between the bore and the indentations.

The present invention aims at remedying this defect by proposing a new arrangement for rotationally driving a roller.

It relates therefore to a roller made from a refractory material and comprising an external surface, an inner surface and two side surfaces, at least one of the side surface having indentations parallel to the roller axis for receiving rotationally driving pins, the present invention relates to roller wherein the indentations are spaced apart from the external and inner surface.

WO-A2-2004/097319 already proposes a solution to the above problem. The present invention is an alternative solution.

The present invention has for first object a roller from a refractory material for transporting a flat article, according to claim 1. According to the invention, at least one of the indentation is provided with a metal jacket. Thereby, the stress and the shocks caused by the driving device and particularly by the pins hitting the walls of the indentation are homogeneously distributed. In this case, the jacket is preferably constituted of a metal pipe adjusted into the indentation. Advantageously, this pipe is slit longitudinally so as to provide some elasticity.

According to the invention, it is meant by pin any means able to engage into an indentation of the roller to transmit a rotation couple. This term comprises the above described fingers.

The present invention also relates to an assembly comprising:
- such a roller and
- a driving device comprising pins borne by a rotary support and able to engage in the roller indentations,
said assembly being characterized in that at least one pin and the indentation which receives the pin are formed so that a significant play, according to a radial direction of the roller, stands between the pin and the metal jacket in the indentation when said pin has engaged into the said indentation.

The invention remedies the above indicated problem by leaving a significant play between the pin and the metal jacket in the radial direction of the roller, i.e. in a direction passing through the roller axis.

It is meant by significant play a free space permitting the movement of the pin, on a stroke larger than the play only due to the manufacturing tolerances, as well as to a functional play necessary for engaging the pin into the metal jacket. The significant play is advantageously selected so as to permit a pin movement in the indentation during the temperature changes occurring during the use of the roller. To this end, the play is of at least 3 mm. Preferably, this play is larger than 4 mm.

This particular configuration of the indentations and pins provides a better distribution of the whole bearing surface between the driving device and the roller which contributes to the reduction of the stress concentration risk on the edges of the roller.

Advantageously, the longitudinal inner surface is a bearing surface of the roller with which the roller bears on a bearing shaft. The external face of the roller remains intact and continuous which can prove preferable in particular applications wherein the whole width of the roller is used for transporting the article in the course of being elaborated.

In order to facilitate the understanding of the invention, embodiments will now be described, only as examples which do not limit the scope of the invention, with the help of the enclosed figures wherein:
- figure 1 is a longitudinal section of a vitreous silica roller used for transporting glass, according to the prior art;
- figure 2 is a left view of the prior art roller of figure 1;
- figure 3 is a view similar to figure 2 of a roller according to the invention;
- figure 4 is a left view of the roller of figure 3;
- figure 5 is a perspective view of a metal jacket according to the invention;

On the drawings, the elements are depicted at ambient temperature, i.e. in the position they occupy when the roller is not in use for transporting glass. The thermal expansions of the hot elements cause relative displacements between the elements which are not depicted here.

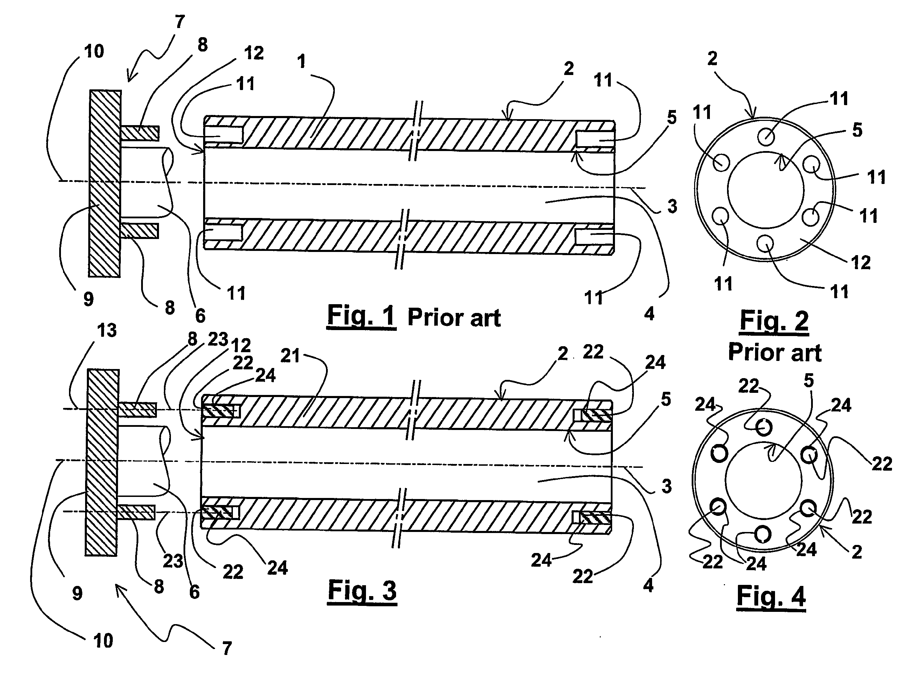

In the prior art, which is illustrated by figures 1 and 2, a roller 1 of cylindrical shape is made from vitreous silica by a known process.

This roller has a length of several meters and a diameter which, according to the type of roller, can be comprised between 10 and 20 centimeters.

An external longitudinal surface 2 of the roller serves as bearing surface for glass (not shown) in the process of being elaborated which is transported with several rollers of the same kind arranged parallel together.

The glass rolls on the external longitudinal surface 2 of the roller which, to this end, must have a very smooth surface and a very cylindrical shape of axis 3.

An axial bore 4 is formed inside the roller, coaxial with the external longitudinal surface 2. The precisely cylindrical shape of the wall 5 of the bore 4 is obtained by a precise machining which ensures that this inner longitudinal surface has a cylindrical shape of the same axis 3.

The bore 4 permits the passage of a bearing shaft 6 (partly shown) which maintains the roller rectilinear and supports it by the bearing surface 5, while allowing its rotation.

The rotational driving of the roller 1 is ensured, as is well known, by a driving device 7 present on both ends of the roller but of which only one half, shown on the left of the roller on the figure is described here.

The driving device comprises six driving fingers 8, parallel to the axis 3 and borne by a support 9 rotarily mounted around an axis 10 which merges with the axis 3 when the roller is mounted on the driving device.

In the example shown, the bearing shaft 6 is integral with the rotary support 9, but another arrangement could leave it separate from the rotary support since the shaft is not intended to drive the roller in rotation.

The six fingers 8 are regularly distributed around the bearing shaft 6 and correspond to six indentations 11 formed in the thickness of the roller on its end side surface 12 located in front of the driving device.

The length of the fingers 8 and the indentations 11 is selected long enough so that, despite the differential thermal expansions of the shaft and the roller, the fingers keep a part of their length inside the indentations sufficient to transmit to the roller the required couple without twisting.

The diameter of each indentation 11 is slightly larger than that of the corresponding driving finger 8, so that the fingers can easily slide into the indentations both when the roller is assembled and during the thermal variations of the assembly, the support expanding more than the roller.

The driving device constituted by the support 7 and the driving fingers 8 combined to the indentations 11 fulfills therefore a driving function which is dissociated from the supporting function assigned to the bearing shaft 9.

It can be seen that the roller exhibits the risk that the thin part of matter present between each indentation 11 and the axis 3 be destroyed during the use of the roller or that parts of the indentation walls become destroyed when hit by the fingers.

A roller according to the invention will now be described with reference to figures 3 and 4.

On these figures, the reference numbers previously used designate the same elements as these already described.

A roller 21 comprises a longitudinal external surface 2 and an inner longitudinal surface 5 delimiting an axial bore 4. The external and inner longitudinal surfaces 2 and 5 are coaxial, they share the same axis.

The indentations 22 formed on the lateral end faces 12 of the roller are provided with a metal jacket.

In cross-section, as shown on figure 4, each indentation is round-shaped with a diameter equal which is slightly greater than that of the fingers 8 of the driving device. Each indentation is provided with a metal jacket 24.

Thereby, when the driving fingers 8 are engaged into the indentations 22, there remains a play around the finger between each finger 8 and the bottom of the corresponding jacket.

Thereby, the risk that a thin part of matter present between each indentation 11 and the axis 3 be destroyed during the use of the roller is discarded since the walls of the indentation are protected by the metal jacket.

In the above described example, the driving device 7 and the roller 21 comprise respectively six fingers 8 and six indentations 22.

One would not depart from the scope of the invention by varying this number, provided the integrity of the roller is respected during the transmission to this last of a rotary moment.

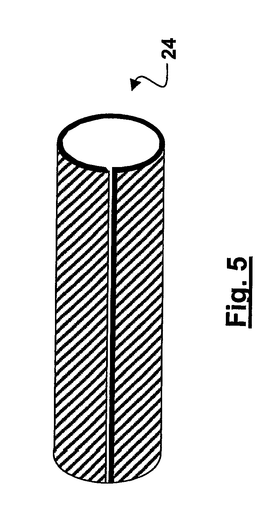

Figure 5 depicts a perspective view of a metal jacket 24 according to the invention.

According to the invention, at least one of the indentation is provided with a metal jacket. Thereby, the stress and the shocks caused by the driving device are homogeneously distributed. In this case, the jacket is preferably constituted of a metal pipe adjusted into the indentation. Advantageously, this pipe is slit longitudinally so as to provide some elasticity.

## Claims

1. Roller (21) from a refractory material comprising an external surface (2), an inner surface (5) and two side surfaces (12), at least one side surface (12) having indentations (22) parallel to the roller axis (3) and spaced apart from the external (2) and inner surface (5) for receiving rotationally driving pins (8), **characterized in that** at least one of the indentations (22) is provided with a metal jacket (24).

2. Roller according to claim 1, **characterized in that** the inner surface (5) is a bearing surface of the roller with which the roller bears on a bearing shaft (6).

3. Roller according to claim 1 or 2, **characterized in that** the metal jacket (24) is constituted of a metal pipe.

4. Roller according to claim 3, **characterized in that** the metal jacket (24) is constituted of a metal pipe longitudinally slit.

5. Assembly comprising;
- a roller (21) according to any one of the claims 1 to 4 and
- a driving device (7) comprising pins (8) borne on a rotary support (9) and able to engage in the roller indentations (22),
said assembly being **characterized in that** at least one pin (8) and the indentation (22) which receives the pin (8) are formed so that a play, according to a radial direction of the roller, of at least 3 mm stands between the pin and the indentation when said pin has engaged into the said indentation.

## Patentansprüche

1. Rolle (21) aus einem Feuerfestmaterial, umfassend eine äußere Oberfläche (2), eine innere Oberfläche (5) und zwei seitliche Oberflächen (12), wobei mindestens eine seitliche Oberfläche (12) Einbuchtungen (22) parallel zur Rollenachse (3) und im Abstand von der äußeren (2) und inneren Oberfläche (5) zur Aufnahme von Drehantriebsbolzen (8) aufweist, **dadurch gekennzeichnet, dass** mindestens eine der Einbuchtungen (22) mit einem Metallmantel (24) versehen ist.

2. Rolle nach Anspruch 1, **dadurch gekennzeichnet, dass** die innere Oberfläche (5) eine Lageroberfläche der Rolle ist, mit der die Rolle auf einer Lagerwelle (6) aufliegt.

3. Rolle nach Anspruch 1 oder 2, **dadurch gekennzeichnet, dass** der Metallmantel (24) von einem Metallrohr gebildet wird.

4. Rolle nach Anspruch 3, **dadurch gekennzeichnet, dass** der Metallmantel (24) von einem längsgeschlitzten Metallrohr gebildet wird.

5. Baugruppe, umfassend:
- eine Rolle (21) nach einem der Ansprüche 1 bis 4, und
- eine Antriebsvorrichtung (7) umfassend Bolzen (8), die von einer Drehhalterung (9) getragen werden und imstande sind, in die Rolleneinbuchtungen (22) einzugreifen,
wobei die Baugruppe **dadurch gekennzeichnet ist, dass** der mindestens eine Bolzen (8) und die Einbuchtung (22), die den Bolzen (8) aufnimmt, so ausgebildet sind, dass ein Spiel, entsprechend einer radialen Richtung der Rolle, von mindestens 3 mm zwischen dem Bolzen und der Einbuchtung vorhanden ist, wenn der Bolzen in die Einbuchtung eingegriffen hat.

## Revendications

1. Rouleau(21) fait d'un matériau réfractaire comprenant une surface externe (2), une surface interne (5) et deux surfaces latérales (12), au moins une desdites surfaces latérales (12) possédant des logements (22) parallèles à l'axe du rouleau (3) et espacés des surfaces externe (2) et interne (5) pour recevoir des broches (8) d'entrainement en rotation, **caractérisé en ce qu'**au moins un desdits logements (22) est muni d'une chemise métallique (24).

2. Rouleau selon la revendication 1, **caractérisé en ce que** la surface interne (5) est une surface de support du rouleau grâce à laquelle le rouleau repose sur un arbre de support (6).

3. Rouleau selon la revendication ou 2, **caractérisé en ce que** la chemise métallique (24) est constitué d'un tube métallique.

4. Rouleau selon la revendication 3, **caractérisé en ce que** la chemise métallique est constitué d'un tube métallique fendu longitudinalement.

5. Assemblage comprenant:
- un rouleau (21) selon l'une quelconque des revendications 1 à 4 et
- un dispositif d'entraînement (7) comprenant des broches (8) portées par un support rotatif (9) et pouvant être introduites dans les logements du rouleau (22),
ledit assemblage étant **caractérisé en ce que** au moins une broche (8) et le logement (22) qui reçoit la broche (8) sont conformés de manière à ce qu'il subsiste selon une direction radiale du rouleau, un jeu d'au moins 3 mm entre la broche et le logement, lorsque ladite broche est introduite dans ledit logement.
